# EUROPÄISCHE PATENTSCHRIFT

(11) **EP 3 083 093 B1**
(45) Veröffentlichungstag und Bekanntmachung des Hinweises auf die Patenterteilung: **20.03.2019**
(21) Anmeldenummer: 13814552.9
(22) Anmeldetag: 20.12.2013
(51) Int. Cl.: B21D 5/00, B21D 5/02, G01N 33/20

(54) **VERFAHREN UND VORRICHTUNG ZUR ERMITTLUNG DER ABRIEBEIGENSCHAFTEN VON BESCHICHTETEN FLACHPRODUKTEN MITTELS BIEGEN**
METHOD AND DEVICE FOR DETERMINING THE WEAR PROPERTIES OF COATED FLAT PRODUCTS BY MEANS OF BENDING
PROCÉDÉ ET DISPOSITIF SERVANT À DÉTERMINER PAR PLIAGE LES PROPRIÉTÉS D'USURE DE PRODUITS PLATS REVÊTUS

(43) Veröffentlichungstag der Anmeldung: 26.10.2016
(73) Patentinhaber: ThyssenKrupp Steel Europe AG, 47166 Duisburg (DE)
(72) Erfinder: SIEGEL, Marcel, 47058 Duisburg (DE); HEIDBUECHEL, Peter, 46348 Raesfeld (DE); YANIK, Robert, 33100 Paderborn (DE); URAN, Klaus, 47447 Moers (DE)
(74) Vertreter: Cohausz & Florack
(86) Internationale Anmeldenummer: PCT/EP2013/077796
(87) Internationale Veröffentlichungsnummer: WO 2015/090467

(56) Entgegenhaltungen:
- DE-A1- 2 844 867
- DE-A1- 3 914 762
- DE-A1- 4 445 741
- JP-A- S6 257 717
- JP-A- S60 170 529
- JP-A- 2001 353 526

## Beschreibung

Die Erfindung betrifft ein Verfahren zur Ermittlung der Abriebeigenschaften von beschichteten Flachprodukten, vorzugsweise Metallflachprodukten, insbesondere Stahlflachprodukten. Ferner betrifft die Erfindung eine Biegevorrichtung zum Biegen von beschichteten Flachprodukten, vorzugsweise Metallflachprodukten, insbesondere Stahlflachprodukten, zur Ermittlung der Abriebeigenschaften der Flachprodukte, wobei ein Biegespalt zur teilweisen Aufnahme des gebogenen Flachprodukts und wenigstens ein Biegemittel zum Biegen des Flachprodukts wenigstens teilweise in den Biegespalt hinein vorgesehen sind.

Eine für viele Anwendungen wesentliche Eigenschaft von beschichteten Flachprodukten ist die Abriebfestigkeit der Beschichtung. Daher werden bei der Herstellung entsprechender Flachprodukte hohe Anforderungen an die Abriebneignung der Beschichtung gestellt. Unter beschichteten Flachprodukten werden insbesondere Metall-, Stahl-, Leichtmetall- oder Verbundflachprodukte verstanden, wobei diese beispielsweise als Band, Blech, Zuschnitt oder Platine vorliegen können. Weiter vorzugsweise kann es sich bei diesen Produkten um warm- oder kaltgewalzte Produkte handeln. Hinsichtlich der Beschichtung kommen beispielsweise Zinkbeschichtungen in Frage, die durch Feuerverzinken oder eine elektrolytische Verzinkung etwa eines Stahlflachprodukts bereitgestellt werden können. Derartige Flachprodukte können anschließend diffusionsgeglüht werden (galvannealed). Das unbeschichtete Flachprodukt kann als Substrat bezeichnet werden, welches die Beschichtung wenigstens einseitig, vorzugsweise beidseitig, trägt. Die Beschichtung von Flachprodukten kann beispielsweise beim Biegen des Flachprodukts beschädigt werden und sich teilweise ablösen, wodurch sogenannter Abrieb entsteht. Ein Verfahren und eine Vorrichtung zum Biegen von Flachprodukten ist beispielsweise in der DE 28 44 867 A1 beschrieben.

Aufgrund der hohen Anforderungen an die Beschichtungen von entsprechenden Flachprodukten besteht zum Zwecke der Qualitätssicherung ein hohes Interesse, an einer vergleichbaren Bestimmung von Abriebeigenschaften unterschiedlicher Flachprodukte. Galvannealed beschichtete Stahlbänder, die sowohl verzinkt (galvanized) als auch geglüht (annealed) sind, kommen beispielsweise in der Automobilindustrie etwa als Außenhautteile, Verstärkungen oder Innenteile zum Einsatz und müssen daher hohe Oberflächenanforderungen erfüllen. Insbesondere in diesem Zusammenhang kann das sogenannte Powdering problematisch sein, das eine Art des Abriebs der Zinkbeschichtung beim Umformen beschreibt, bei dem Partikel der Beschichtung ausbrechen. Davon wird typischerweise das Flaking unterschieden, bei dem es sich um ein flächiges Ablösen der Beschichtung handelt.

Die Neigung eines beschichteten Flachprodukts zum Powdering kann mit dem sogenannten Klebestreifenbiegetest abgeschätzt werden. Dabei wird ein Klebestreifen auf eine Werkstückprobe aufgeklebt und diese im Bereich des Klebestreifens stark gebogen, wobei es regelmäßig zu einem Abrieb (Powdering) kommt. Der Klebestreifen kann auch nach dem Biegen auf den gebogenen Bereich der Werkstückprobe des Flachprodukts aufgeklebt werden. Die ausgebrochenen Partikel der Beschichtung bleiben an dem Klebestreifen haften, der bedarfsweiseerst nach einem Zurückbiegen (Plätten) der Werkstückprobe in den Ausgangszustand, abgezogen wird. Anschließend wird der Klebestreifen auf einen weißen Untergrund geklebt, so dass sich die Partikel der Beschichtung als grauer Belag abzeichnen. Wenn die Biegung entlang einer Biegelinie erfolgt ist, liegen die ausgebrochenen Partikel ebenfalls in Form einer Linie vor. Die Abriebeigenschaften können anhand der Schwärzung der Linie durch die Partikel der Beschichtung und/oder anhand der Breite der Linie aus Partikeln der Beschichtung bestimmt werden. Man spricht in diesem Zusammenhang auch vom Grad des Powderings.

Die Bestimmung der Abriebeigenschaften erfolgt überwiegend qualitativ, so dass die Abriebeigenschaften eines Flachprodukts erst im Wege eines Vergleichs mit den Abriebeigenschaften anderer Flachprodukte in aussagekräftiger Weise beurteilt werden können. Dies ist jedoch nur für gleichartige beschichtete Flachprodukte möglich, deren Abriebeigenschaften in gleicher Weise ermittelt wurden.

Unterscheiden sich die beschichteten Flachprodukte beispielsweise hinsichtlich ihrer Dicke und/oder hinsichtlich ihrer Festigkeit, lässt ein geringerer Abrieb nicht unbedingt auf verbesserte Abriebeigenschaften schließen und umgekehrt.

Der vorliegenden Erfindung liegt daher die Aufgabe zugrunde, das Verfahren und die Vorrichtung der eingangs genannten und zuvor näher beschriebenen Art derart auszugestalten und weiterzubilden, dass eine bessere Vergleichbarkeit der ermittelten Abriebeigenschaften unterschiedlicher Flachprodukte erzielt werden kann.

Diese Aufgabe ist gemäß Anspruch 1 durch ein Verfahren der genannten Art gelöst, bei dem anhand von Informationen betreffend die Dicke und/oder die Festigkeit der jeweils zu biegenden Flachprodukte nach festgelegten Kriterien wenigstens ein Biegeparameter für das Biegen des jeweiligen Flachprodukts mit einer Biegevorrichtung ausgewählt wird, bei dem die Flachprodukte in der Biegevorrichtung jeweils entsprechend der gewählten Biegeparameter unter Erzeugung von Abrieb gebogen werden und bei dem die Abriebeigenschaften anhand des Abriebs der jeweiligen Flachprodukte in vorbestimmter Weise analysiert werden.

Die Erfindung hat folglich erkannt, dass eine Vergleichbarkeit der Abriebeigenschaften von Flachprodukten, die sich hinsichtlich ihrer Dicke und/oder ihrer Festigkeit unterscheiden, erreicht werden kann, indem die Flachprodukte auf unterschiedliche Weise gebogen werden. Die Unterschiede beim Biegen werden dabei gezielt vorgegeben, und zwar anhand der Dicke und/oder der Festigkeit der zu untersuchenden Flachprodukte. Auf diese Weise werden auch bei an sich unterschiedlichen Flachprodukten recht reproduzierbare Belastungen beim Biegen erreicht, so dass ein vermehrter Abrieb tatsächlich auch auf eine höhere Abriebneigung der Beschichtung hindeutet und umgekehrt. Zudem lässt sich auf die zuvor beschriebene Weise die Reproduzierbarkeit bei der Bestimmung der Abriebeigenschaften verbessern.

Somit können für bestimmte Anwendungen mit hoher Aussagekraft auch an sich unterschiedliche Flachprodukte hinsichtlich ihrer Abriebeigenschaften miteinander verglichen werden. Dies hat zur Folge, dass die entsprechend bestimmten Abriebeigenschaften nicht bloß im Sinne einer Qualitätskontrolle verwendet werden können, wobei für ein bestimmtes Testprozedere und für ein bestimmtes Flachprodukt eine Mindestabriebeigenschaft nachgewiesen werden muss, um die Qualitätsanforderungen zu erfüllen. Vielmehr lassen sich die Abriebeigenschaften unterschiedlicher Flachprodukte miteinander vergleichen. So kann beispielsweise die Eignung unterschiedlicher Flachprodukte für eine bestimmte Anwendung anhand der ermittelten Abriebeigenschaften beurteilt werden. Dies kann Auswirkungen auf die Verwendung eines bestimmten Flachprodukts zur Herstellung eines Erzeugnisses oder auf die Auswahl eines Erzeugnisses für eine bestimmte Anwendung haben.

Zur Durchführung des Verfahrens müssen Informationen hinsichtlich der Dicke und/oder der Festigkeit der zu biegenden Flachprodukte bekannt sein. Bedarfsweise werden diese Informationen zuvor messtechnisch ermittelt. Unter einer entsprechenden Information kann vorzugsweise eine die Dicke und/oder die Festigkeit direkt beschreibende (Mess-)Größe verstanden werden. Es kommt aber auch eine Angabe in Frage, die abhängig ist von der Größe und/oder der Festigkeit des Flachprodukts.

Anhand dieser Informationen wird dann vor dem Biegevorgang für ein bestimmtes Flachprodukt wenigstens ein Biegeparameter eingestellt bzw. ausgewählt. Nach welchen Kriterien diese Auswahl erfolgt, ist zuvor festgelegt worden. Dabei können die Kriterien theoretisch ermittelt und/oder empirisch bestimmt worden sein. Als Biegeparameter kommen beispielsweise Parameter in Frage, die entweder die Art bestimmen, mit der das Flachprodukt gebogen wird, oder den Umfang festlegen, in dem das Flachprodukt gebogen wird. Der Biegeparameter kann beispielsweise bestimmen, womit oder wie weit das Flachprodukt gebogen wird.

Auf diese Weise kann eine zwischen unterschiedlichen Flachprodukten vergleichbare und reproduzierbare Belastung beim Biegen sichergestellt werden. Außerdem kann bedarfsweise sichergestellt werden, dass die Biegebelastung nicht zu einem Bruch des Flachprodukts führt. Andererseits kann aber erreicht werden, dass die Biegebelastung in der Nähe der zum Bruch des Flachprodukts führenden Biegebelastung liegt. Die Biegebelastung kann vorzugsweise wenigstens 75%, insbesondere wenigstens 85%, vorzugsweise 90% der Biegefestigkeit betragen. Als besonders vorteilhaft hat es sich erwiesen, wenn die Biegebelastung wenigstens 95% oder zwischen 95 % und 99% der zum Bruch führenden Biegebelastung und/oder Zugfestigkeit beträgt. Es kommt dann also gerade eben nicht zum Bruch der Werkstückprobe, was zu vermeiden ist. Grundsätzlich ist es bevorzugt, wenn dickere und/oder festere Flachprodukte stärker schwächer gebogen werden, da diese eher versagen, also schon ein weniger ausgeprägtes Biegen zum Bruch führt.

Um die Vergleichbarkeit der beim Biegen erzeugten Mengen an Abrieb sicherzustellen, wird der Abrieb jedes Flachprodukts in vorbestimmter Weise analysiert. Dabei kommen insbesondere optische und/oder graphische Analysemethoden in Frage. Die Analyse des Abriebs führt zu einer die Abriebeigenschaften und/oder die Menge des beim Biegen erzeugten Abriebs beschreibenden Kenngröße. Dabei kann es sich beispielsweise um einen den Abrieb beschreibenden Grauwert oder eine Abmessung des auf dem Klebstreifen fixierten Abriebs handeln.

Bei einer ersten bevorzugten Ausgestaltung des Verfahrens wird der Biegeparameter für das Biegen des jeweiligen Flachprodukts nach festgelegten Kriterien anhand einer Information betreffend die Zugfestigkeit des jeweiligen Flachprodukts festgelegt. Auf diese Weise kann die beim Biegen auf das Flachprodukt wirkende Belastung für unterschiedliche Flachprodukte recht gleichbleibend eingestellt werden. Bei vergleichbaren Biegebelastungen ist das Ausmaß des Abriebs in hohem Maße von der Beschaffenheit der Beschichtung und/oder der Anbindung der Beschichtung an das Flachprodukt, also das Substart des beschichteten Flachprodukts, abhängig.

Grundsätzlich bedeutet eine höhere Zugfestigkeit einen höheren Widerstand gegen eine plastische Verformung sowie eine geringere Duktilität des Werkstoffs. Das Biegen muss daher behutsamer erfolgen als bei geringeren Zugfestigkeiten. Die Werkstückprobe sollte also weniger weit (größerer Biegewinkel) und/oder in einem größeren Radius (Biegeradius) umgebogen werden.

Alternativ oder zusätzlich wird die Vergleichbarkeit der ermittelten Abriebeigenschaften verbessert, wenn diese anhand des Abriebs der jeweiligen Flachprodukte wenigstens in im Wesentlichen gleicher Weise analysiert werden. Es kann also ein standardisiertes Verfahren verwendet werden, dessen Durchführung nicht von der Art und Weise des vorherigen Schrittes des Biegens und damit nicht von der Dicke und/oder der Festigkeit des Flachprodukts abhängt. Besonders zweckmäßig kann es sein, wenn Abriebeigenschaften anhand des Abriebs der jeweiligen Flachprodukte in identischer Weise analysiert werden.

Ein Biegeparameter, der in Abhängigkeit der Dicke und/oder der Festigkeit der Flachprodukte nach vorbestimmten Kriterien gewählt werden kann, ist der Biegewinkel, also der Winkel bis zu dem zwei Flächen des Flachprodukts aufeinander zugebogen werden, und/oder der Biegekeilradius eines für das Biegen des Flachprodukts verwendeten Biegemittels. Der Biegekeilradius bestimmt daher den Radius des gebogenen Flachprodukts entlang der Biegelinie, wobei der Biegeradius dort im Wesentlichen dem Biegekeilradius entspricht. Beide Biegeparameter, also der Biegewinkel und der Biegekeilradius, bestimmen in hohem Maße die Belastungen für das Flachprodukt beim Biegevorgang. Unter einem Biegemittel wird in diesem Zusammenhang ein Mittel verstanden, das beim Biegen gegen das Flachprodukt drückt und dieses somit umbiegt. Insbesondere drückt das Biegemittel zwischen zwei Auflagepunkten für das Flachprodukt in der Biegevorrichtung gegen das Flachprodukt. Der Kontakt zwischen dem Flachprodukt und dem Biegemittel erfolgt vorzugsweise im Bereich des Biegespalts der Biegevorrichtung. Dabei ist es grundsätzlich bevorzugt, wenn der Biegewinkel mit zunehmender Dicke abnimmt, da dickere Werkstückproben grundsätzlich bereits bei geringeren Biegewinkeln brechen. Zudem ist es grundsätzlich bevorzugt, wenn der Biegekeilradius mit der Dicke des Flachprodukts grundsätzlich zunimmt, da dicke Werkstückproben behutsamer gebogen werden müssen, um einen Bruch zu vermeiden.

Gute Ergebnisse wurden mit Biegewinkeln zwischen 60°und 120°, insbesondere zwischen 80° und 110°, weiter vorzugsweise zwischen 90° und 100°, erzielt. Dabei kann es ausreichend sein, wenn maximal vier, insbesondere maximal drei, weiter vorzugweise maximal zwei, unterschiedliche Biegewinkel Anwendung finden. Diese beiden Biegewinkel können 90° und 100° betragen. Die verwendeten Biegekeilradien können beispielsweise zwischen 0,2 und 2,5 mm liegen. Bevorzugt wird dabei die Verwendung von maximal sechs, insbesondere maximal vier, unterschiedlicher Biegekeilradien. Die Biegekeilradien liegen dabei vorzugsweise zwischen 1 mm und 6 mm. So können vorzugsweise Biegekeilradien von 1 mm, 2 mm, 3 mm und/oder 6 mm verwendet werden. Die genannten Werte der Biegekielradien und der Biegewinkel ermöglichen beispielsweise die gleichmäßige Bestimmung der Abriebeigenschaften von Flachprodukten mit einer Dicke zwischen 0,5 mm und 3 mm, insbesondere zwischen 1 mm und 2,5 mm und/oder einer Zugfestigkeit zwischen 250 MPa und 1500 MPa, insbesondere zwischen 300 MPa und 1200 MPa. Dabei kann es der Einfachheit halber ausreichen, wenn hinsichtlich der Zugfestigkeit der zu biegenden Werkstückproben zwischen maximal vier Zugfestigkeitsintervallen unterschieden wird, um den wenigstens einen Biegeparameter auszuwählen. Aus dem gleichen Grund kann weiter vorzugsweise zur Auswahl des wenigstens einen Biegeparameters zwischen lediglich zwei Zugfestigkeitsintervallen unterschieden werden. Die Zugfestigkeitsintervalle können beispielsweise einerseits Zugfestigkeiten von bis zu 700 MPa und andererseits Zugfestigkeiten von größer 700 MPa bis einschließlich 1200 MPa umfassen.

Zur Einstellung bzw. Auswahl des Biegekeilradius bietet es sich an, wenn vor dem Biegen der Flachprodukte jeweils in Abhängigkeit des gewählten Biegekeilradius ein entsprechendes Biegemittel, insbesondere ein entsprechender Biegekeil, ausgewählt wird. Dabei werden die Flachprodukte mit dem jeweils ausgewählten Biegemittel gebogen. Es muss also nicht vor dem Biegevorgang umständlich der Biegekeilradius eines einzigen Biegemittels modifiziert werden. Es wird vielmehr der Einfachheit halber aus einer Mehrzahl von Biegemitteln mit unterschiedlichen Biegekeilradien das Biegemittel ausgewählt, welches nach den vorbestimmten Kriterien für das Biegen eines bestimmten Flachprodukts den gewünschten Biegekeilradius aufweist.

Um sicherzustellen, dass die vorbestimmten Biegewinkel beim Biegevorgang auch recht exakt erreicht werden, kann vor dem Biegen der Flachprodukte jeweils in Abhängigkeit des gewählten Biegewinkels die Eintauchtiefe des Biegemittels gewählt werden. Die Eintauchtiefe des Biegemittels, vorzugsweise des Biegekeils, in den Biegespalt bestimmt nämlich den beim Biegen zu erreichenden Biegewinkel wenigstens zum Großteil mit.

In diesem Zusammenhang kann der Einfachheit halber als die Eintauchtiefe die Strecke herangezogen werden, die das Biegemittel beim Biegevorgang ausgehend vom Kontakt mit dem noch unverbogenen Flachprodukt bis zur Endstellung im Biegespalt zurücklegt. Die Eintauchtiefe bestimmt also, wie weit das Biegemittel in den Biegespalt eintaucht. Dabei kann ausgenutzt werden, dass sich die Eintauchtiefe sehr einfach und exakt einstellen sowie regeln lässt.

Damit der Biegevorgang anhand der Informationen betreffend die Dicke und/oder die Festigkeit des jeweils zu biegenden Flachprodukts festgelegt werden kann, bietet es sich an, wenn diese Informationen an die Biegevorrichtung, insbesondere eine Steuereinrichtung übermittelt werden. Alternativ kann natürlich auch vorgesehen sein, dass diese Informationen in der Biegevorrichtung und/oder einer zugeordneten Messeinrichtung für jedes Flachprodukt vor dem Biegevorgang ermittelt werden, was jedoch konstruktiv und verfahrensmäßig aufwendiger sein kann.

Um die Abriebeigenschaften reproduzierbar anhand des beim Biegen erzeugten Abriebs ermitteln zu können, bietet es sich an, wenn vor, während oder nach dem Biegen jeweils ein Klebemittel, vorzugsweise ein Klebestreifen, auf das jeweilige Flachprodukt zur Aufnahme wenigstens eines Teils des Abriebs aufgebracht wird. Wenn das Klebemittel nach dem Biegen aufgebracht wird, kann beim Biegen bereits Abrieb verloren gehen, der bei der anschließenden Analyse des Abriebs nicht berücksichtigt wird. Das Aufbringen des Klebestreifens während des Biegens ist zwar möglich, jedoch aufgrund des erhöhten Aufwands eher weniger bevorzugt. Das Klebemittel wird jedenfalls nach dem Biegen, insbesondere einem Zurückbiegen oder Plätten des Flachprodukts, vom Flachprodukt abgezogen. Dabei soll der jeweilige Abrieb möglichst vollständig am jeweiligen Klebemittel haften bleiben, um eine aussagekräftige Analyse des Abriebs zur Bestimmung der Abriebeigenschaften der Flachprodukte durchführen zu können. Daher bietet es sich auch an, wenn die Flachprodukte nach dem Biegen wenigstens teilweise zurückgebogen oder wieder in die flache Ausgangsform gebracht werden (Plätten). Im geplätteten Zustand wird der von der Beschichtung gelöste Abrieb besser freigegeben. Es wird vermieden, dass an sich gelöste Partikel der Beschichtung infolge Klemmung nicht zusammen mit dem Klebemittel abgezogen werden können. Zum Plätten kann das gebogene Flachprodukt auf eine ebene Auflage gebracht und mittels eines ebenfalls ebenen Stempels nieder (flach) gedrückt werden.

Die eingangs genannte Aufgabe wird ferner bei einer Vorrichtung nach dem Oberbegriff von Anspruch 1 dadurch gelöst, dass eine Steuereinrichtung zur Steuerung wenigstens eines Biegeparameters beim Biegen des wenigstens einen Flachprodukts vorgesehen ist und dass die Steuereinrichtung zur Veränderung des wenigstens einen Biegeparameters nach vorbestimmten Kriterien anhand von Informationen betreffend die Dicke und/oder die Festigkeit zwischen wenigstens zwei Biegevorgängen vorgesehen ist.

Die Steuereinrichtung steuert wenigstens einen Biegeparameter in Abhängigkeit der Dicke und/oder der Festigkeit des zu biegenden Flachprodukts. Der Biegeparameter wird also zwischen zwei Biegevorgängen mit Hilfe der Steuereinrichtung variiert, wenn bei den Biegevorrichtungen Flachprodukte mit hinreichend unterschiedlichen Dicken und/oder Festigkeiten gebogen werden. Wie der Biegeparameter in Abhängigkeit von der Dicke und/oder der Festigkeit des Flachprodukts durch die Steuereinrichtung zu variieren ist, bestimmt sich anhand vorher festgelegter Kriterien.

Auf die entsprechende Weise wird eine vergleichbare Belastung beim Biegen unterschiedlicher Flachprodukte erreicht. Somit ist auch der Umfang des beim Biegen erzielten Abriebs vergleichbar. Werden nun noch auf vergleichbare Weise die Abriebeigenschaften anhand des jeweiligen Abriebs ermittelt, sind die Abriebeigenschaften unterschiedlicher Flachprodukte in hohem Maße vergleichbar. Letztlich werden die bereits im Zusammenhang mit dem Verfahren beschriebenen Vorteile erzielt. Die Beschreibungen des Verfahrens sind ohnehin grundsätzlich auf die Beschreibung der Vorrichtung übertragbar und umgekehrt.

Bei einer ersten bevorzugten Ausgestaltung der Biegevorrichtung ist eine Mehrzahl von Biegemitteln, vorzugsweise in Form von Biegekeilen, vorgesehen. Von diesen Biegemitteln kann nach vorgegebenen Kriterien anhand der Informationen betreffend die Dicke und/oder die Festigkeit des Flachprodukts ein geeignetes Biegemittel, etwa mit einem geeigneten Biegekeilradius, ausgewählt und zum Biegen herangezogen werden. Dazu kann der Einfachheit halber eine Biegemittelwechseleinrichtung vorgesehen sein, die zwischen wenigstens zwei Biegevorgängen nach den Vorgaben der Steuereinrichtung die jeweils zum Biegen verwendeten Biegemittel wechselt, und zwar insbesondere automatisch, so dass der Bediener der Biegevorrichtung nicht händisch einzugreifen braucht.

Die Biegemittelwechseleinrichtung kann einen mehrere Biegemittel tragenden Revolverkopf umfassen. Mit Hilfe des Revolverkopfs können dann zwischen wenigstens zwei Biegevorgängen die jeweils zum Biegen verwendeten Biegemittel gewechselt werden. Die Ausgestaltung in Form eines Revolverkopfs ermöglicht ein einfaches Wechseln der Biegemittel durch bloßes Drehen des Revolverkopfs in die gewünschte Position, in der das gewünschte Biegemittel wirksam ist, d.h. zum Biegen verwendet werden kann.

Um die Flachprodukte jeweils recht genau in einem bestimmten Biegewinkel um das Biegemittel zu biegen, kann das jeweils zum Biegen verwendete Biegemittel und/oder der Biegespalt einer Verfahreinrichtung zugeordnet sein, die für ein Eintauchen des wenigstens einen Biegemittels in einer von der Steuereinrichtung vorgegebenen maximalen Eintauchtiefe sorgt. Dabei wird der Biegespalt vorzugsweise relativ zum Biegemittel und/oder das Biegemittel relativ zum Biegespalt verfahren. Zudem gibt die Steuereinrichtung die Eintauchtiefe vor, und zwar insbesondere anhand der Dicke und/oder der Festigkeit der zu biegenden Flachprodukte und nach vorgegebenen Kriterien. Daher kann die durch die Verfahreinrichtung erzeugte maximale Eintauchtiefe des Biegemittels in den Biegespalt zwischen zwei aufeinander folgenden Biegevorgängen gezielt verändert werden.

Zweckmäßig ist es zudem, wenn die Steuereinrichtung wenigstens eine Schnittstelle zur Aufnahme und eine Verarbeitungseinrichtung zur Verarbeitung der Informationen betreffend die Dicke und/oder die Festigkeit der zu biegenden Flachprodukte aufweist. Dann kann der Biegevorrichtung zusammen mit dem zu biegenden Flachprodukt auch eine Information betreffend die Dicke und/oder die Festigkeit des Flachprodukts mitgegeben werden, die die Steuereinrichtung, insbesondere die Verarbeitungseinrichtung, veranlasst, zum Biegen des entsprechenden Flachprodukts wenigstens einen Biegeparameter nach bestimmten Vorgaben zu wählen.

Dabei ist die Steuereinrichtung vorzugsweise dazu ausgebildet, den wenigstens einen Biegeparameter nach vorbestimmten Kriterien anhand von Informationen betreffend die Zugfestigkeit zu verändern, und zwar zwischen wenigstens zwei aufeinanderfolgenden Biegevorgängen.

### Beispiel

Die Kriterien nach denen die Steuereinrichtung den Biegekeilradius und den Biegewinkel für das Biegen eines bestimmten Flachprodukts anhand der Informationen betreffend die Dicke und die Zugfestigkeit des Flachprodukts vorgeben kann, sind in der nachfolgenden Tabelle beispielhaft angegeben:

| Zugfestigkeit des Flachprodukts < 700 MPa | | | |
|---|---|---|---|
| Dicke | 0,5 - 1,1 mm | 1,2 - 2 mm | 2,1 - 2,6 mm |
| Biegekeilradius | 1 mm | 1 mm | 2 mm |
| Biegewinkel | 90° | 100° | 100° |
| | | | |

| Zugfestigkeit des Flachprodukts 700 MPa - 1000 MPa | | | |
|---|---|---|---|
| Dicke | 0,7 - 1,1 mm | 1,2 - 1,4 mm | 1,5 - 1,8 mm |
| Biegekeilradius | 1 mm | 3 mm | 3 mm |
| Biegewinkel | 100° | 90° | 100° |
| | | | |
| Dicke | 1,9 - 2,2 mm | 2,3 - 2,5 mm | |
| Biegekeilradius | 6 mm | 6 mm | |
| Biegewinkel | 90° | 100° | |

Nachfolgend wird die Erfindung anhand einer lediglich ein Ausführungsbeispiel darstellenden Zeichnung näher erläutert.

In der Zeichnung zeigt
- Fig. 1: ein mit einem Klebestreifen versehenes beschichtetes Flachprodukt in Draufsicht,
- Fig. 2: eine erfindungsgemäße Biegevorrichtung mit dem Flachprodukt aus Fig. 1 im noch ungebogenen Zustand in einer Seitenansicht,
- Fig. 3: die Biegevorrichtung aus Fig. 2 mit dem Flachprodukt aus Fig. 2 im gebogenen Zustand in einer Seitenansicht,
- Fig. 4: eine Plätteinrichtung mit dem Flachprodukt aus Fig. 3 in einer Seitenansicht,
- Fig. 5: das mit dem Klebestreifen versehende Flachprodukt aus Fig. 3 nach dem Plätten in einer Draufsicht und
- Fig. 6: ein erfindungsgemäßes Verfahren in einer schematischen Fließbildbarstellung.

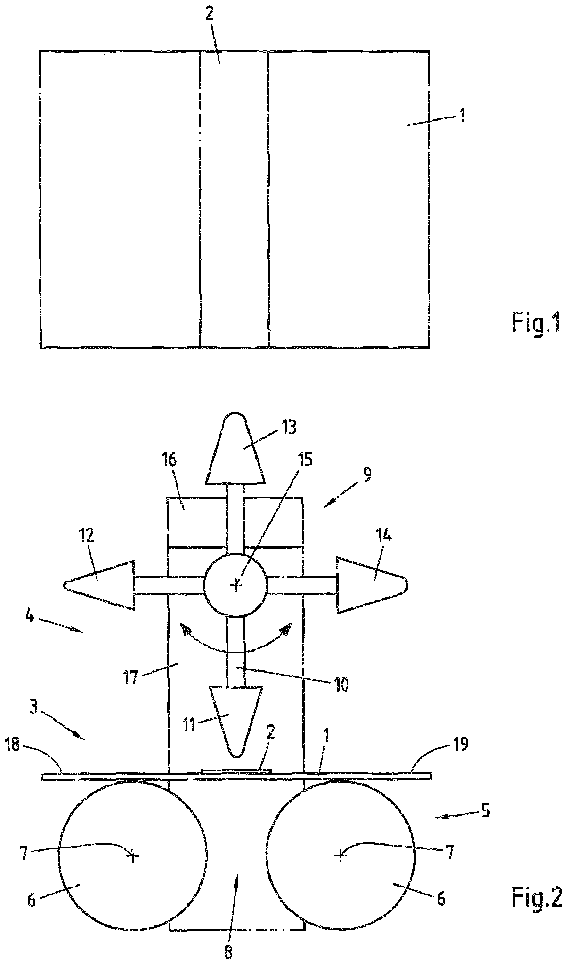

In der Fig. 1 ist ein beschichtetes Flachprodukt 1 in Form eines galvannealed beschichteten Stahlbands in Draufsicht dargestellt, dessen Abriebeigenschaften untersucht werden sollen. Auf das Flachprodukt 1 ist aus diesem Grunde ein Klebemittel in Form eines Klebestreifens 2, vorzugsweise aus einem Kunststoff, insbesondere einem durchsichtigen Kunststoff, aufgeklebt. Das mit dem Klebestreifen 2 versehene Flachprodukt 1 wird in eine Aufnahme 3 der Biegevorrichtung 4 verbracht, die in der Fig. 2 dargestellt ist. Das Flachprodukt 1 wird dort in einer Ausgangsstellung auf ein sogenanntes Rollengesenk 5 platziert. Anstelle eines Rollengesenks 5 mit zwei Rollen 6, die um zwei parallele Achsen 7 drehbar sind, die jeweils parallel zur Ebene des ungebogenen Flachprodukts 1 ausgerichtet sind, könnte auch ein anderes Gesenk, etwa ein sogenanntes V-Gesenk vorgesehen sein, welches eine V-förmige Kerbe zum Einbiegen des Flachprodukts 1 aufweist. Es könnte auch ein Gesenk aus zwei parallel zueinander angeordneten Auflagern, die angrenzend zum Biegespalt abgerundet sind, oder ein Gesenk mit feststehenden, d.h. nicht drehbaren, Rollen vorgesehen sein. Das dargestellte und insoweit bevorzugte Rollengesenk 5 umfasst zwei Rollen 6 mit jeweils einem Durchmesser von 50 mm. Es kommen grundsätzlich aber auch andere Rollendurchmesser in Frage. Die Rollen 6 bilden zwischeneinander einen Biegespalt 8 mit einer Mindestbreite an der engsten Stelle des Biegespalts 8 von 6 mm parallel zur Ebene des Flachprodukts 1 im ungebogenen Ausgangszustand gemäß Fig. 2. Der Biegespalt könnte grundsätzlich auch variabel sein. Hierzu könnte eine gefederte Lagerung wenigstens einer Rolle so vorgesehen sein, dass der Biegespalt breiter wird, je höhere Kräfte auf die Rolle, insbesondere die wenigstens eine entsprechende Feder, ausgeübt werden. Es kann auch vorgesehen sein, dass sich der Biegespalt verbreitert, wenn die auf die wenigstens eine gefederte Rolle ausgeübte Kraft einen bestimmten Betrag übersteigt.

Oberhalb des ungebogenen Flachprodukts 1 ist eine Biegemittelwechseleinrichtung 9 in Form eines Revolverkopfs 10 mit vier Biegekeilen 11,12,13,14 vorgesehen, der ebenfalls um eine Achse 15 parallel zur Ebene des ungebogenen Flachprodukts 1 drehbar ist, um so das Flachprodukt 1 jeweils mit dem gewünschten Biegekeil 11,12,13,14 biegen zu können. Der Revolverkopf 10 muss dazu nur in eine entsprechende Position gedreht werden. Die Position, in die der Revolverkopf 10 gedreht wird, wird von einer Steuereinrichtung 16 vorgegeben. Der Steuereinrichtung 16 werden über eine nicht dargestellte Schnittstelle Informationen betreffend die Dicke und die Festigkeit, insbesondere die Zugfestigkeit, der zu biegenden Flachprodukte 1 übermittelt, die von einer ebenfalls nicht dargestellten Verarbeitungseinrichtung verarbeitet werden. Anhand dieser Informationen steuert die Steuereinrichtung 16 den Revolverkopf 10 an, so dass dieser sich so dreht, dass das Flachprodukt 1 mit dem Biegekeil 11 mit dem gewünschten Biegekeilradius gebogen wird. Nach welchen Kriterien der Biegekeilradius gewählt wird, ist bereits zuvor festgelegt worden. Die Kriterien sind vorzugsweise in der Speichereinheit abgelegt. Für eine bestimmte Kombination zwischen Dicke und Festigkeit des Flachprodukts 1 ist vorzugsweise zuvor empirisch ermittelt worden, welcher Biegekeilradius und Biegewinkel α verwendet werden sollte, um eine Biegung des Flachprodukts 1 zu bewirken, die mit der Biegung von Flachprodukten 1 anderer Dicken und Festigkeiten hinsichtlich der Erzeugung von Abrieb vergleichbar ist.

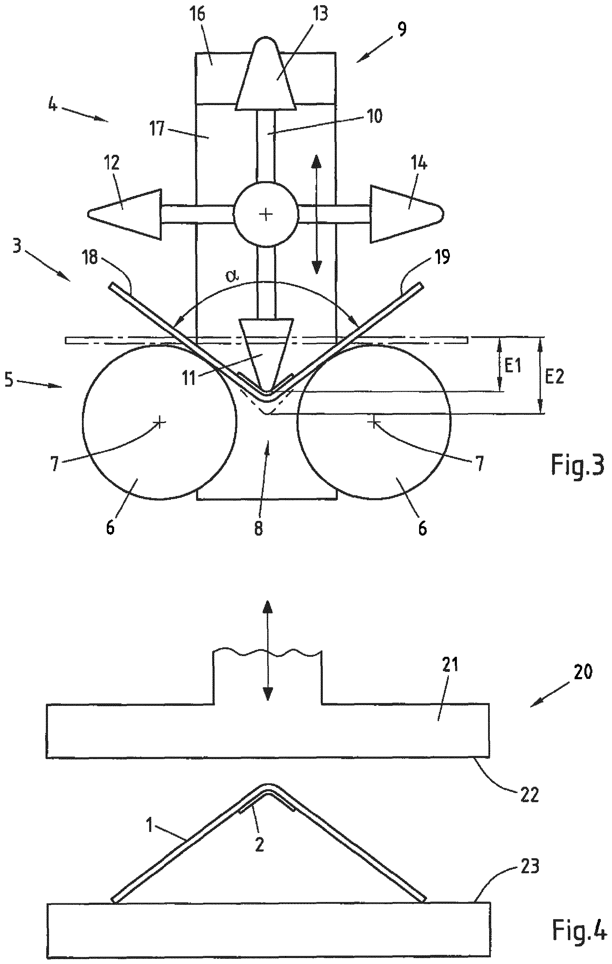

Der Revolverkopf 10 mit den vier Biegekeilen 11,12,13,14 ist an einer Verfahreinrichtung 17 gehalten. Die Verfahreinrichtung 17 ist so ausgebildet, dass der in Richtung des Flachprodukts 1 weisende Biegekeil 11 in den Biegespalt 8 hinein gefahren werden kann. Wie weit der Biegekeil 11 in den Biegespalt 8 eingefahren wird, wird von der Steuereinrichtung 16 gesteuert. Die Steuereinrichtung 16 legt dabei anhand der Informationen betreffend die Dicke und die Festigkeit des zu biegenden Flachprodukts 1 fest, wie weit der Biegekeil 11 in den Biegespalt 8 eingeschoben wird. Dabei wird der Biegewinkel α, also der Winkel zwischen den aufeinander zugebogenen Flächen 18,19 des Flachprodukts 1 umso kleiner, je weiter der Biegekeil 11 in den Biegespalt 8 eingefahren wird. Dabei korreliert der Biegewinkel α für ein gegebenes Gesenk im Wesentlichen direkt mit der sogenannten Eintauchtiefe des Biegekeils. Die Eintauchtiefe ist in der Fig. 3 dargestellt. Die Eintauchtiefe E1 entspricht dabei einem Biegewinkel α von etwa 100°, während die Eintauchtiefe E2 einem Biegewinkel α von etwa 90° entspricht. Die Eintauchtiefe ergibt sich dabei als Abstand zwischen der Oberfläche des ungebogenen Flachprodukts 1 und dem unteren Ende des Biegekeils 11,12,13,14 in der beim jeweiligen Biegevorgang maximal eingefahrenen Stellung des Biegekeils 11,12,13,14.

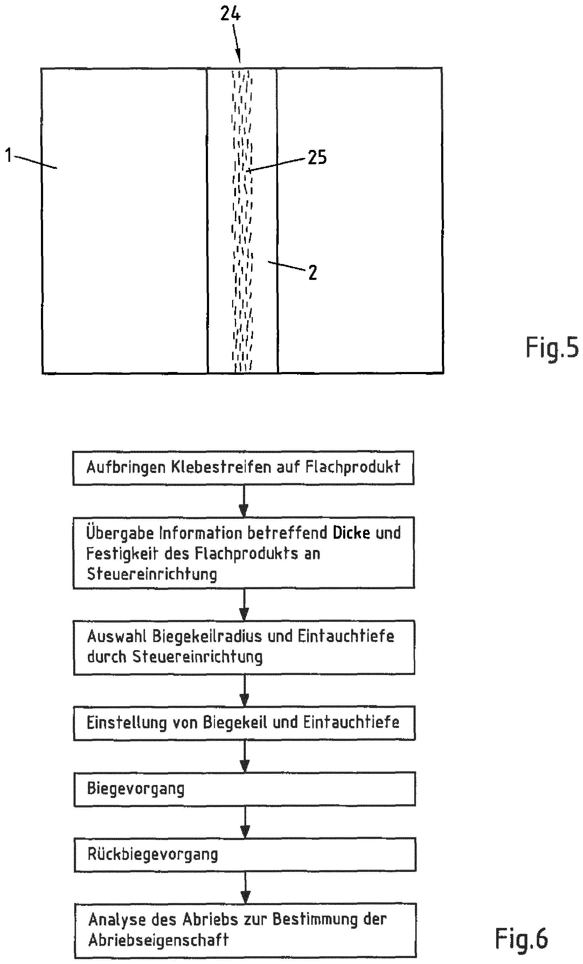

Nach dem Biegen wird das gebogene Flachprodukt 1 aus der Biegevorrichtung 4 entnommen und in einer Plätteinrichtung 20 gemäß Fig. 4 zwischen einem Stempel 21 mit ebener Unterseite 22 und einer ebenen Auflage 23 geplättet. Die Biegung des Flachprodukts 1 wird dabei rückgängig gemacht und das Flachprodukt 1 wieder in eine flache Form zurückgeführt. Auf diese Weise wird das Flachprodukt 1 gemäß Fig. 5 erhalten. Das Flachprodukt 1 wurde an einer Biegelinie 24 entlang des Klebestreifens 2 gebogen, was dort zu einem Abrieb 25 geführt hat, der als Streifen längs zum Klebstreifen 2 vorliegt und am Klebestreifen 2 anhaftet. Der Abrieb 25 kann somit zusammen mit dem Klebestreifen 2 vom Flachprodukt 1 abgezogen und anschließend analysiert werden, um die Abriebeigenschaften anzugeben. Die Abriebeigenschaften können daher als Grad der Schwärzung oder als sogenannter Grauwert des Streifens aus Abrieb 25 angegeben werden. Alternativ kann aber auch die Breite des Streifens aus Abrieb 25 ermittelt und als Angabe über die Abriebeigenschaften verwendet werden. Grundsätzlich gilt, dass der Streifen umso breiter und schwärzer ist, je mehr Abrieb 25 beim Biegen erzeugt wurde. Die Art und Weise der Auswertung des Klebestreifens 2 mitsamt Abrieb 25 und die Ermittlung der Abriebeigenschaften kann an sich wie im Stand der Technik zum sogenannten Klebestreifenbiegetest oder auch V-Bend-Test beschrieben erfolgen.

In der Fig. 6 ist ein schematischer Ablauf eines Verfahrens der zuvor genannten Art beschrieben. Zunächst wird gemäß des dargestellten und insoweit bevorzugten Verfahrens ein Klebestreifen auf ein beschichtetes Flachprodukt, vorzugsweise in Form eines galvannealed beschichteten Stahlblechs, aufgeklebt. Das Flachprodukt wird vorzugsweise danach in einer Aufnahme einer Biegevorrichtung auf einem Gesenk platziert. Zudem werden die Dicke und die Festigkeit des Flachprodukts an die Steuereinrichtung einer Biegevorrichtung weitergegeben. Anhand der Informationen betreffend die Dicke und die Festigkeit des Flachprodukts werden ein Biegekeilradius und eine Eintauchtiefe für den Biegevorgang ausgewählt und eingestellt. Sodann wird das Flachprodukt mit Hilfe des Biegekeils gebogen, der zusammen mit dem Flachprodukt um eine vorbestimmte Strecke in den Biegespalt eintaucht. Hinterher wird das Flachprodukt aus der Biegevorrichtung entnommen und in einer Plätteinrichtung wieder flach gedrückt bzw. zurückgebogen. Alternativ kann jedoch die Plätteinrichtung in die Biegevorrichtung integriert sein. Dies ist insbesondere dann möglich, wenn der Revolverkopf 10 zusätzlich zu den Biegekeilen noch einen Plättstempel mit einer ebenen Plättfläche aufweist, der zum Plätten des gebogenen Flachprodukts in Position gedreht werden kann, um mit dem Gesenk zum Plätten des Flachprodukts zusammenzuwirken. Anschließend wird vorzugsweise der Klebestreifen mitsamt dem beim Biegen erzeugten Abrieb vom Flachprodukt abgezogen und anhand des Klebstreifens die Abriebeigenschaft des entsprechenden Flachprodukts ermittelt.

Die zuvor für ein Flachprodukt beschriebenen Verfahrensschritte werden nacheinander für unterschiedliche Flachprodukte durchgeführt, die sich hinsichtlich ihrer Dicke und/oder Festigkeit unterscheiden. Die Entsprechend bestimmten Abriebeigenschaften sind trotz dieser Unterschiede untereinander in hohem Maße vergleichbar.

## Patentansprüche

1. Verfahren zur Ermittlung der Abriebeigenschaften von beschichteten Flachprodukten (1), vorzugsweise Metallflachprodukten, insbesondere Stahlflachprodukten, wie galvannealed Stahlflachprodukten,
bei dem anhand von Informationen betreffend die Dicke und/oder die Festigkeit der jeweils zu biegenden Flachprodukte (1) nach festgelegten Kriterien wenigstens ein Biegeparameter für das Biegen des jeweiligen Flachprodukts (1) mit einer Biegevorrichtung (4) ausgewählt wird,
bei dem die Flachprodukte in der Biegevorrichtung (4) jeweils entsprechend der gewählten Biegeparameter unter Erzeugung von Abrieb (25) gebogen werden und
bei dem die Abriebeigenschaften anhand des Abriebs (25) der jeweiligen Flachprodukte (1) in vorbestimmter Weise analysiert werden.

2. Verfahren nach Anspruch 1,
bei dem anhand der Informationen betreffend die Zugfestigkeit der jeweils zu biegenden Flachprodukte (1) nach festgelegten Kriterien wenigstens ein Biegeparameter für das Biegen des jeweiligen Flachprodukts (1) mit einer Biegevorrichtung (4) ausgewählt wird.

3. Verfahren nach Anspruch 1 oder 2,
bei dem die Abriebeigenschaften anhand des Abriebs (25) der jeweiligen Flachprodukte (1) wenigstens in im Wesentlichen gleicher Weise analysiert werden.

4. Verfahren nach einem der Ansprüche 1 bis 3,
bei dem wenigstens ein Biegeparameter in Form eines Biegewinkels (α) und/oder eines Biegekeilradius für das Biegen des Flachprodukts (1) in der Biegevorrichtung (4) ausgewählt werden.

5. Verfahren nach Anspruch 4,
bei dem vor dem Biegen der Flachprodukte (1) jeweils in Abhängigkeit des gewählten Biegekeilradius ein entsprechendes Biegemittel, insbesondere ein entsprechender Biegekeil (11,12,13,14), ausgewählt wird und bei dem die Flachprodukte (1) mit dem jeweils ausgewählten Biegekeil (11,12,13,14) gebogen werden.

6. Verfahren nach Anspruch 4 oder 5,
bei dem vor dem Biegen der Flachprodukte (1) jeweils in Abhängigkeit des gewählten Biegewinkels ( 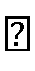 ) die Eintauchtiefe (E1,E2) eines Biegemittels, vorzugsweise Biegekeils (11,12,13,14), in einen Biegespalt (8) gewählt wird.

7. Verfahren nach Anspruch 6,
bei dem als die Eintauchtiefe (E1,E2) die Strecke herangezogen wird, die das Biegemittel beim Biegevorgang ausgehend vom Kontakt mit dem noch unverbogenen Flachprodukt (1) bis zur Endstellung im Biegespalt (8) zurücklegt.

8. Verfahren nach einem der Ansprüche 1 bis 7,
bei dem der Biegevorrichtung (4) Informationen betreffend die Dicke und/oder die Festigkeit des jeweils zu biegenden Flachprodukts (1) übermittelt werden.

9. Verfahren nach einem der Ansprüche 1 bis 8,
bei dem vor, während oder nach dem Biegen der Flachprodukte ein Klebemittel, vorzugsweise ein Klebestreifen (2), auf das jeweilige Flachprodukt (1) zur Aufnahme wenigstens eines Teils des Abriebs (25) aufgebracht wird, bei dem die Klebemittel mit dem am jeweiligen Klebemittel haftenden Teil des Abriebs (25) vom jeweiligen Flachprodukt (1) abgezogen werden und bei dem anschließend der am jeweiligen Klebemittel haftende Teil des Abriebs (25) zur Bestimmung der Abriebeigenschaften des jeweiligen Flachprodukts analysiert wird.

10. Biegevorrichtung (4) zum Biegen von beschichteten Flachprodukten (1), vorzugsweise Metallflachprodukten, insbesondere Stahlflachprodukten, wie galvannealed Stahlflachprodukten, zur Ermittlung der Abriebeigenschaften der Flachprodukte (1), vorzugsweise nach einem der Ansprüche 1 bis 9,
wobei ein Biegespalt (8) zur teilweisen Aufnahme des gebogenen Flachprodukts (1) und wenigstens ein Biegemittel zum Biegen des Flachprodukts (1) wenigstens teilweise in den Biegespalt (8) hinein vorgesehen sind,
**dadurch gekennzeichnet, dass**
eine Steuereinrichtung (16) zur Steuerung wenigstens eines Biegeparameters beim Biegen des wenigstens einen Flachprodukts (1) vorgesehen ist und dass die Steuereinrichtung (16) zur Veränderung des wenigstens einen Biegeparameters nach vorbestimmten Kriterien anhand von Informationen betreffend die Dicke und/oder die Festigkeit zwischen wenigstens zwei Biegevorgängen vorgesehen ist.

11. Biegevorrichtung nach Anspruch 10,
**dadurch gekennzeichnet, dass**
eine Mehrzahl von Biegemitteln, vorzugsweise Biegekeile (11,12,13,14), vorgesehen sind und dass eine Biegemittelwechseleinrichtung (9) zum Wechseln der jeweils zum Biegen verwendeten Biegemittel zwischen wenigstens zwei Biegevorgängen nach den Vorgaben der Steuereinrichtung (16) vorgesehen ist.

12. Biegevorrichtung nach Anspruch 11,
**dadurch gekennzeichnet, dass**
ein mehrere Biegemittel tragender Revolverkopf (10) vorgesehen ist und dass die jeweils zum Biegen verwendeten Biegemittel zwischen wenigstens zwei Biegevorgängen, vorzugsweise unter anderem, durch Drehen des Revolverkopfs (10) gewechselt werden können.

13. Biegevorrichtung nach einem der Ansprüche 10 bis 12,
**dadurch gekennzeichnet, dass**
dem zum Biegen verwendeten Biegemittel und/oder dem Biegespalt (8) eine Verfahreinrichtung (17) zugeordnet ist, um das wenigstens eine Biegemittel bis zu einer von der Steuereinrichtung (16) vorgegebenen maximalen Eintauchtiefe (E1,E2) in den Biegespalt (8) hineinzufahren, und dass die von der Verfahreinrichtung (17) erzeugte maximale Eintauchtiefe (E1,E2) des Biegemittels zwischen wenigstens zwei Biegevorgängen von der Steuereinrichtung (16) nach bestimmten Vorgaben veränderbar ist.

14. Biegevorrichtung nach einem der Ansprüche 10 bis 13,
**dadurch gekennzeichnet, dass**
die Steuereinrichtung (16) wenigstens eine Schnittstelle zur Aufnahme und eine Verarbeitungseinrichtung zur Verarbeitung der Informationen betreffend die Dicke und/oder die Festigkeit der zu biegenden Flachprodukte (1) aufweist.

15. Biegevorrichtung nach einem der Ansprüche 10 bis 14,
**dadurch gekennzeichnet, dass**
die Steuereinrichtung (16) zur Veränderung des wenigstens einen Biegeparameters nach vorbestimmten Kriterien anhand von Informationen betreffend die Zugfestigkeit zwischen wenigstens zwei Biegevorgängen vorgesehen ist.

## Claims

1. Method for determining the wear properties of coated flat products (1), preferably flat metal products, in particular flat steel products, such as galvannealed flat steel products,
wherein based on information concerning the thickness and/or the strength of the respective flat products (1) to be bent, at least one bending parameter for the bending of the respective flat product (1) with a bending device (4) is selected according to set criteria,
wherein the flat products are in each case bent in the bending device (4) according to the selected bending parameters with the creation of wear (25) and wherein the wear properties are analysed based on the wear (25) of the respective flat products (1) in a predetermined manner.

2. Method according to Claim 1,
wherein based on information concerning the tensile strength of the respective flat products (1) to be bent, at least one bending parameter for the bending of the respective flat product (1) with a bending device (4) is selected according to set criteria.

3. Method according to Claim 1 or 2,
wherein the wear properties are analysed based on the wear (25) of the respective flat products (1) at least substantially in the same way.

4. Method according to any one of Claims 1 to 3,
wherein at least one bending parameter is selected in the form of a bending angle (α) and/or a bending wedge radius for bending the flat product (1) in the bending device (4).

5. Method according to Claim 4,
wherein prior to bending the flat products (1) in each case as a function of the bending wedge radius selected a corresponding bending means, in particular an appropriate bending wedge (11,12,13,14), is selected and wherein the flat products (1) are bent with the bending wedge (11,12,13,14) selected in each case.

6. Method according to Claim 4 or 5,
wherein prior to bending the flat products (1), in each case as a function of the bending angle (α) selected, the plunging depth (E1,E2) of a bending means, preferably bending wedge (11,12,13,14), in a bending gap (8) is selected.

7. Method according to Claim 6,
wherein the distance travelled by the bending means during the bending process from contact with the as yet unbent flat product (1) until the final position in the bending gap (8) is taken as the plunging depth (E1,E2).

8. Method according to any one of Claims 1 to 7,
wherein the bending device (4) is sent information concerning the thickness and/or the strength of the respective flat product (1) to be bent.

9. Method according to any one of Claims 1 to 8,
wherein before, during or after the bending of the flat product an adhesive means, preferably an adhesive strip (2), is affixed to the respective flat product (1) to pick up at least part of the wear (25), wherein the adhesive means together with part of the wear (25) adhering to the respective adhesive means is removed from the respective flat product (1) and wherein the part of the wear (25) adhering to the respective adhesive means is analysed for determination of the wear properties of the respective flat product.

10. Bending device (4) for bending coated flat products (1), preferably flat metal products, in particular flat steel products, such as galvannealed flat steel products, for determining the wear properties of the flat products (1), preferably according to any one of Claims 1 to 9,
wherein a bending gap (8) for partially accommodating the bent flat product (1) and at least one bending means for bending the flat product (1) at least partially into the bending gap (8) are provided,
**characterised in that**
a control device (16) for controlling at least one bending parameter during bending of the at least one flat product (1) is provided and
**in that** the control device (16) is provided for changing the at least one bending parameter according to predetermined criteria based on information concerning the thickness and/or the strength between at least two bending processes.

11. Bending device according to Claim 10,
**characterised in that**
a plurality of bending means, preferably bending wedges (11,12,13,14), are provided and **in that** a bending means exchange device (9) for changing the respective bending means used for bending between at least two bending processes according to the specifications of the control device (16) is provided.

12. Bending device according to Claim 11,
**characterised in that**
a turret head (10) supporting a plurality of bending means is provided and **in that** the respective bending means used for bending can be changed between at least two bending processes, preferably inter alia, by rotation of the turret head (10).

13. Bending device according to any one of Claims 10 to 12,
**characterised in that**
the bending means used for bending and/or the bending gap (8) is associated with a moving device (17), to plunge the at least one bending means up to a maximum plunging depth (E1,E2) specified by the control device (16) into the bending gap (8), and **in that** the maximum plunging depth (E1,E2) of the bending means created by the moving device (17) can be changed between at least two bending processes by the control device (16) according to certain specifications.

14. Bending device according to any one of Claims 10 to 13,
**characterised in that**
the control device (16) has at least one interface for receiving and one processing unit for processing the information concerning the thickness and/or the strength of the flat products (1) to be bent.

15. Bending device according to any one of Claims 10 to 14,
caracterised in that
the control device (16) is provided to change the at least one bending parameter according to predetermined criteria, based on information concerning the tensile strength, between at least two bending processes.

## Revendications

1. Procédé pour déterminer les propriétés abrasives de produits plats (1) revêtus, de préférence des produits plats métalliques, notamment des produits plats en acier tels que des produits plats en acier recuits par galvanisation,
selon lequel au moins un paramètre de pliage pour le pliage du produit plat (1) respectif avec un arrangement de pliage (4) est sélectionné d'après des critères définis à l'aide d'informations concernant l'épaisseur et/ou la solidité des produits plats (1) respectifs à plier,
selon lequel les produits plats sont pliés dans l'arrangement de pliage (4) respectivement conformément au paramètre de pliage sélectionné en générant une abrasion (25) et
selon lequel les propriétés abrasives de l'abrasion (25) des produits plats (1) respectifs sont analysées d'une manière prédéterminée.

2. Procédé selon la revendication 1,
selon lequel au moins un paramètre de pliage pour le pliage du produit plat (1) respectif avec un arrangement de pliage (4) est sélectionné d'après des critères définis à l'aide d'informations concernant la résistance à la traction des produits plats (1) respectifs à plier.

3. Procédé selon la revendication 1 ou 2,
selon lequel les propriétés abrasives sur la base de l'abrasion (25) des produits plats (1) respectifs sont analysées d'une manière sensiblement identique.

4. Procédé selon l'une des revendications 1 à 3,
selon lequel au moins un paramètre de pliage est sélectionné sous la forme d'un angle de pliage ( 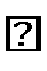 ) et/ou d'un rayon de clavette de pliage pour le pliage du produit plat (1) dans l'arrangement de pliage (4).

5. Procédé selon la revendication 4,
selon lequel, avant le pliage du produit plat (1), un moyen de pliage correspondant, notamment une clavette de pliage (11, 12, 13, 14) correspondante, est respectivement sélectionné en fonction du rayon de clavette de pliage sélectionné, et selon lequel les produits plats (1) sont pliés avec la clavette de pliage (11, 12, 13, 14) respectivement sélectionnée.

6. Procédé selon la revendication 4 ou 5,
selon lequel, avant le pliage du produit plat (1), la profondeur d'introduction (E1, E2) d'un moyen de pliage, de préférence d'une clavette de pliage (11, 12, 13, 14), dans une fente de pliage (8) est sélectionnée respectivement en fonction de l'angle de pliage ( 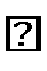 ) sélectionné.

7. Procédé selon la revendication 6,
selon lequel la profondeur d'introduction (E1, E2) utilisée est le trajet qui est parcouru par le moyen de pliage lors de l'opération de pliage à partir du contact avec le produit plat (1) non encore plié jusqu'à la position finale dans la fente de pliage (8).

8. Procédé selon l'une des revendications 1 à 7,
selon lequel des informations concernant l'épaisseur et/ou la solidité des produits plats (1) respectifs à plier sont communiquées à l'arrangement de pliage (4).

9. Procédé selon l'une des revendications 1 à 8,
selon lequel, avant, pendant ou après le pliage des produits plats, un agent adhésif, de préférence une bande adhésive (2), est appliqué sur le produit plat (1) respectif en vue d'absorber au moins une partie de l'abrasion (25), selon lequel les agents adhésifs sont retirés du produit plat (1) respectif avec la partie de l'abrasion (25) qui adhère aux agents adhésifs respectifs et selon lequel la partie de l'abrasion (25) qui adhère à l'agent adhésif respectif est ensuite analysée en vue de déterminer les propriétés abrasives du produit plat respectif.

10. Arrangement de pliage (4) destiné à plier des produits plats (1) revêtus, de préférence des produits plats métalliques, notamment des produits plats en acier tels que des produits plats en acier recuits par galvanisation, en vue de déterminer les propriétés abrasives de produits plats (1), de préférence selon l'une des revendications 1 à 9,
une fente de pliage (8) destiné à accueillir partiellement le produit plat (1) plié et au moins un moyen de pliage destiné à plier le produit plat (1) au moins partiellement dans la fente de pliage (8) étant présents,
**caractérisé en ce que**
un dispositif de commande (16) destiné à commander au moins un paramètre de pliage pour le pliage de l'au moins un produit plat (1) est présent et **en ce que** le dispositif de commande (16) est conçu pour modifier l'au moins un paramètre de pliage entre au moins deux opérations de pliage d'après des critères définis à l'aide d'informations concernant l'épaisseur et/ou la solidité.

11. Arrangement de pliage selon la revendication 10,
**caractérisé en ce que**
une pluralité de moyens de pliage, de préférence des clavettes de pliage (11, 12, 13, 14), sont prévus et un dispositif de changement de moyen de pliage (9) destiné à changer le moyen de pliage respectivement utilisé pour le pliage entre au moins deux opérations de pliage d'après les indications du dispositif de commande (16)est prévu.

12. Arrangement de pliage selon la revendication 11,
**caractérisé en ce que**
une tête revolver (10) qui porte plusieurs moyens de pliage est prévue et **en ce que** le moyen de pliage respectivement utilisé pour le pliage peut être changé entre au moins deux opérations de pliage, de préférence entre autres en faisant tourner la tête revolver (10).

13. Arrangement de pliage selon l'une des revendications 10 à 12,
**caractérisé en ce que**
un dispositif de déplacement (17) est associé au moyen de pliage utilisé pour le pliage et/ou à la fente de pliage (8) afin de déplacer l'au moins un moyen de pliage à l'intérieur de la fente de pliage (8) jusqu'à une profondeur d'introduction (E1, E2) maximale prédéfinie par le dispositif de commande (16), et **en ce que** la profondeur d'introduction (E1, E2) maximale du moyen de pliage générée par le dispositif de commande (16) peut être modifiée par le dispositif de commande (16) entre au moins deux opérations de pliage d'après des indications définies.

14. Arrangement de pliage selon l'une des revendications 10 à 13,
**caractérisé en ce que**
le dispositif de commande (16) possède au moins une interface destinée à l'enregistrement et un dispositif de traitement destiné à traiter les informations concernant l'épaisseur et/ou la solidité des produits plats (1) à plier.

15. Arrangement de pliage selon l'une des revendications 10 à 14,
**caractérisé en ce que**
le dispositif de commande (16) est conçu pour modifier l'au moins un paramètre de pliage entre au moins deux opérations de pliage d'après des critères prédéfinis à l'aide d'informations concernant la résistance à la traction.
